# EUROPÄISCHE PATENTANMELDUNG

(11) **EP 4 098 679 A1**
(43) Veröffentlichungstag der Anmeldung: **07.12.2022**
(21) Anmeldenummer: 21177821.2
(22) Anmeldetag: 04.06.2021
(51) Int. Cl.: C08G 18/10, C08G 18/38, C08G 18/42, C08G 18/72, C08G 18/73, C08G 18/79, C09D 175/06, C09D 5/00, C08G 18/50, C08G 18/66, C08K 3/22

(54) **DECKBESCHICHTUNG MIT GUTER HAFTUNG AUF POLYURETHAN-UND POLYHARNSTOFFMEMBRANEN**

(71) Anmelder: Sika Technology AG, 6340 Baar (CH)
(72) Erfinder: DAWN, Steven, Ormskirk, L39 4TF (GB); BYRNE, Michael, FY8 2TF, Lytham (GB); COWARD, Alexander, M33 3FB, Sale (GB)
(74) Vertreter: Sika Patent Attorneys

(57) **Zusammenfassung**

Die vorliegende Erfindung betrifft eine Zusammensetzung bestehend aus einer ersten Komponente enthaltend mindestens ein Polyasparaginsäureester P1-1 und gegebenenfalls ein Polyasparaginsäureester P1-2, sowie eine Mischung verschiedener Polyetherasparaginsäureester P2, und einer zweiten Komponente enthaltend mindestens ein aliphatisches Polyisocyanat B1 und mindestens ein Isocyanat-Präpolymer B2.

Die Zusammensetzung ist besonders geeignet als Deckbeschichtungszusammensetzung. Sie verfügt über eine gute Haftung auf Polyurea- und Polyurethanmembranen, insbesondere Dachmembranen, und weist Trocknungszeiten von weniger als 120 min auf, sowie eine Bruchdehnung von 80-200 % und eine Zugfestigkeit von mehr als 6 N/mm².

## Beschreibung

### Technisches Gebiet

Die Erfindung betrifft eine Mehrkomponenten-Zusammensetzung, insbesondere eine Zweikomponenten-Zusammensetzung, die als Deckbeschichtung über Polyurethan- oder Polyharnstoffmembranen geeignet ist, insbesondere für Dachbelagsanwendungen.

### Stand der Technik

Insbesondere auf dem Gebiet der Dachdeckung werden Membranen wie Polyurethan- oder Polyharnstoffmembranen eingesetzt, die auf Zweikomponenten-Beschichtungszusammensetzungen basieren, die aromatisches Material enthalten und typischerweise in flüssiger Form auf die Grundstruktur aufgebracht werden.

Diese Membranen sind normalerweise nicht Wetter- und UV-stabil und benötigt daher eine zusätzliche Deckbeschichtung. Solche Deckbeschichtungen enthalten typischerweise einen beträchtlichen Anteil an flüchtigen organischen Lösemitteln, um eine gute Haftung auf den erwähnten Membranen sicherzustellen. Dies ist jedoch aufgrund des Umwelt- und Gesundheitsschutzes nachteilig, da die Zusammensetzungen dadurch hohe VOC-Emissionen aufweisen.

Es besteht daher der Bedarf an zweikomponentigen reaktiven Beschichtungen, welche sich als Deckbeschichtung eignen und eine gute Haftung auf Polyurethan- oder Polyharnstoffmembranen, selbst in Abwesenheit von flüchtigen organischen Lösemitteln, aufweisen. Vorzugsweise weisen solche Beschichtungen eine Trocknungszeit von weniger als 120 min, vorzugsweise weniger als 75 min, sowie eine Bruchdehnung von 80-200 % und eine Zugfestigkeit von mehr als 6 N/mm² auf.

### Darstellung der Erfindung

Die Aufgabe der Erfindung ist es, eine Deckbeschichtungszusammensetzung mit ausreichender Haftung an den genannten Substraten / Membranen, insbesondere Dachmembranen, bereitzustellen, welche vorzugsweise eine Trocknungszeit von weniger als 120 min, vorzugsweise weniger als 75 min , sowie eine Bruchdehnung von 80-200 % und eine Zugfestigkeit von mehr als 6 N/mm² aufweisen.

Überraschenderweise wurde gefunden, dass eine Zusammensetzung nach Anspruch 1 diese Aufgabe löst.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Zusammensetzung bestehend aus einer ersten Komponente enthaltend:
- mindestens ein Polyasparaginsäureester **P1-1** 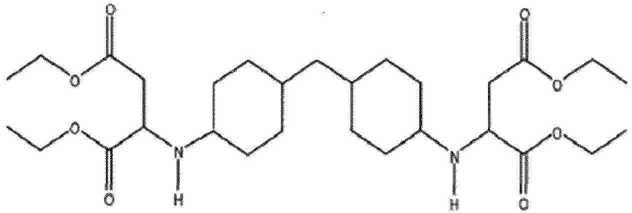 der Formel (II);
- gegebenenfalls einen Polyasparaginsäureester **P1-2** 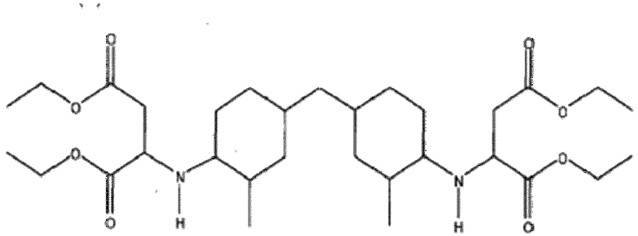 der Formel (III);
- eine Mischung verschiedener Polyetherasparaginsäureester **P2** mit der folgenden Formel: 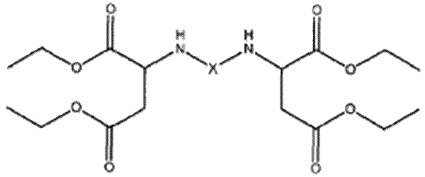 wobei X der Rest eines Polyetherpolyamins ist mit einer Wiederholungseinheit der Struktur 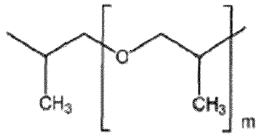 wobei m = 2 bis 35, insbesondere m = 2 bis 6, insbesondere m = 2 bis 4 ist,
   und einer zweiten Komponente enthaltend:
   - mindestens ein aliphatisches Polyisocyanat **B1;**
   - mindestens ein Isocyanat-Präpolymer **B2.**

Der Polyasparaginsäureester **P1-1,** der gegebenenfalls vorhandene Polyasparaginsäureester **P1-2** und die Mischung verschiedener Polyetherasparaginsäureester **P2** sind in einer solchen Menge vorhanden, dass das Gewichtsverhältnis **((P1-1 + P1-2)/P2)** ≤1.5, beträgt.

Das Gewichtsverhältnis Polyasparaginsäureester **P1-1** zu gegebenenfalls vorhandenem Polyasparaginsäureester **P1-2 (P1-1/P1-2)** beträgt ≥0.65.

Weiter liegt das Gewichtsverhältnis von aliphatischem Polyisocyanat **B1** zu Isocyanat-Präpolymer **B2 (B1/B2)** im Bereich von 0.7 - 3.0.

Als "primäre Hydroxylgruppe" wird eine OH-Gruppe bezeichnet, welche an ein C-Atom mit zwei Wasserstoffen gebunden ist.
Als "primäre Aminogruppe" wird eine NH₂-Gruppe bezeichnet, die an einen organischen Rest gebunden ist und als "sekundäre Aminogruppe" wird eine NH-Gruppe bezeichnet, die an zwei organische Reste, welche auch gemeinsam Teil eines Rings sein können, gebunden ist.
Unter "Molekulargewicht" versteht man im vorliegenden Dokument die molare Masse (in Gramm pro Mol) eines Moleküls. Als "mittleres Molekulargewicht" wird das Zahlenmittel Mₙ einer oligomeren oder polymeren Mischung von Molekülen bezeichnet, welches üblicherweise mittels Gelpermeationschromatographie (GPC) gegen Polystyrol als Standard bestimmt wird.
Als "lagerstabil" oder "lagerfähig" wird eine Substanz oder eine Zusammensetzung bezeichnet, wenn sie bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.
Als "Raumtemperatur" wird eine Temperatur von 23 °C bezeichnet.
Als "zweikomponentig" wird eine Zusammensetzung bezeichnet, bei welcher die Bestandteile der Zusammensetzung in zwei verschiedenen Komponenten vorliegen, welche in voneinander getrennten Gebinden gelagert und erst kurz vor oder während der Applikation der Zusammensetzung miteinander vermischt werden.

Die Zusammensetzung weist in der ersten Komponente mindestens ein Polyasparaginsäureester **P1-1** 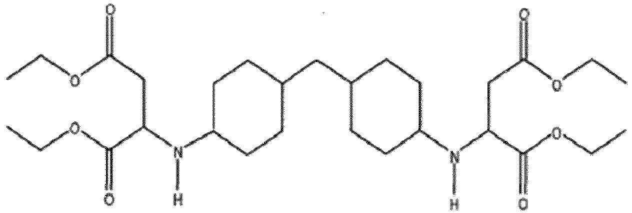 der Formel (II) auf.

Ein geeigneter Polyasparaginsäureester **P1-1** ist kommerziell erhältlich von Bayer Materials Science unter den Handelsnamen Desmophen NH1423.

Die Zusammensetzung weist in der ersten Komponente gegebenenfalls mindestens ein Polyasparaginsäureester **P1-2** 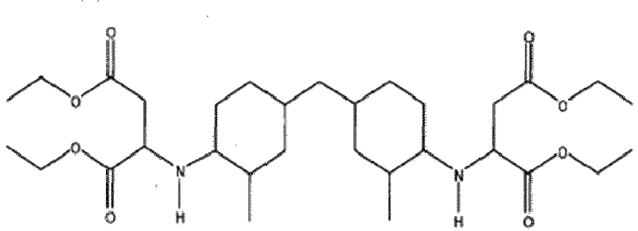 der Formel (III) auf.

Ein geeigneter Polyasparaginsäureester **P1-2** ist kommerziell erhältlich von Bayer Materials Science unter den Handelsnamen Desmophen NH1520.

Vorzugsweise weist der Polyasparaginsäureester **P1-1** und der gegebenenfalls vorhandene Polyasparaginsäureester **P1-2** ein Äquivalenzgewicht von 220 - 300, insbesondere 250 - 300, besonders bevorzugt von 270 - 295, auf.

Es ist weiter bevorzugt, wenn der Polyasparaginsäureester **P1-1** und der gegebenenfalls vorhandene Polyasparaginsäureester **P1-2** eine Viskosität bei 25 °C von 500 - 3,000 mPas, 600 - 2,500 mPas, insbesondere 700 - 2,200 mPas, gemäss DIN 53 019 aufweist, insbesondere gemessen mit einem Rheometer Physica MCR 301 Platte-Platte Rheometer mit einem Messspalt von 0,5 mm gemäss DIN 53 019-1.

Vorzugsweise weist der Polyasparaginsäureester **P1-1** und der gegebenenfalls vorhandene Polyasparaginsäureester **P1-2** eine Aminzahl von 160 - 250, insbesondere 170 - 220, besonders bevorzugt von 180 - 205, auf.

Das Gewichtsverhältnis Polyasparaginsäureester **P1-1** zu gegebenenfalls vorhandenem Polyasparaginsäureester **P1-2 (P1-1/P1-2)** beträgt ≥0.65. Überraschenderweise wurde gefunden, dass ein Gewichtsverhältnis **(P1-1/P1-2)** von kleiner als 0.65 zu einer ungenügenden Zugfestigkeit sowie einer zu langen Trocknungszeit führt. Dies ist beispielsweise in den Beispielen Ref.10-Ref.13 ersichtlich. Vorzugsweise beträgt das Gewichtsverhältnis **(P1-1/P1-2)** im Bereich von ≥0.75, insbesondere ≥0.8.

Weiter kann es vorteilhaft sein, wenn das Gewichtsverhältnis **(P1-1/P1-2)** ≥ 5, insbesondere ≥ 10, insbesondere ≥ 50 beträgt. Es kann auch vorteilhaft sein, wenn die Summer von Polyasparaginsäureester **P1-1** und der Mischung verschiedener Polyetherasparaginsäureester **P2** zusammen **(P1-1** + **P2)** mehr als 80 Gewichts-%, vorzugsweise mehr als 90 Gewichts-%, insbesondere mehr als 95 Gewichts-%, insbesondere bevorzugt mehr als 98 Gewichts-%, am meisten bevorzugt mehr als 99 Gewichts-%, der Polyetherasparaginsäureester ausmachen, die in der ersten Komponente enthalten sind, bezogen auf das Gesamtgewicht der ersten Komponente.

Der Polyasparaginsäureester **P1-1,** der gegebenenfalls vorhandene Polyasparaginsäureester **P1-2** und die Mischung verschiedener Polyetherasparaginsäureester **P2** sind in einer solchen Menge vorhanden, dass das Gewichtsverhältnis **((P1-1 + P1-2)/P2)** ≤1.5, beträgt.

Überraschenderweise wurde gefunden, dass ein Gewichtsverhältnis **((P1-1 + P1-2)/P2)** >1.5 zu einer ungenügenden Bruchdehnung führt. Dies ist beispielsweise in den Beispielen Ref.3-Ref.4 und Ref.8-Ref.9 ersichtlich. Vorzugsweise beträgt das Gewichtsverhältnis ≤1.4, insbesondere ≤1.35, insbesondere 0.25-1.35, insbesondere 0.5-1.1, besonders bevorzugt 0.6-1.0, am meisten bevorzugt 0.7-0.9.

Die Zusammensetzung weist in der ersten Komponente eine Mischung verschiedener Polyetherasparaginsäureester **P2** mit der Formel 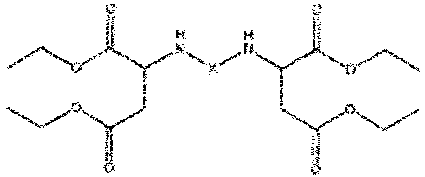 auf, wobei X der Rest eines Polyetherpolyamins ist mit einer Wiederholungseinheit der Struktur 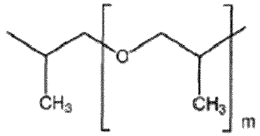 wobei m = 2 bis 35, insbesondere m = 2 bis 6, insbesondere m = 2 bis 4 ist.

Die Mischung von Polyetherasparaginsäureestern umfasst mindestens zwei verschiedene Polyetherasparaginsäureester, die eine unterschiedliche Anzahl von Wiederholungseinheiten in X aufweisen. In bevorzugten Ausführungsformen ist die Mischung so, dass m im Bereich von 2 bis 4 liegt. Solche Polyetherasparaginsäureester können durch Umsetzen einer Mischung von Polyetherpolyaminen mit einem Dialkylmaleat hergestellt werden. Solche Polyetherasparaginsäureester können zum Beispiel durch Einsatz der Reaktanten in solchen Mengen hergestellt werden, dass mindestens ein Äquivalent, vorzugsweise ein Äquivalent, olefinische Doppelbindungen für jedes Äquivalent primärer Aminogruppen vorhanden ist.
Geeignete Polyetherpolyamine, die mit Dialkylmaleamen in Michael-Additionsreaktionen umgesetzt werden können, sind beispielsweise die JEFFAMINE-Polyetheramine, die im Handel von Huntsman Corporation, The Woodlands, TX, erhältlich sind. In besonders bevorzugten Ausführungsformen umfasst die Mischung aus Polyetherpolyaminen eine Mischung aus Polyetherpolyaminen gemäß der Formel (IV) 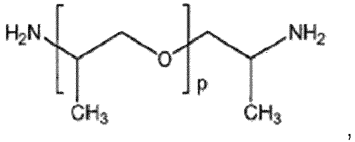 wobei p eine Zahl mit einem Wert von mindestens 2, insbesondere 2 bis 35, 2 bis 8, bevorzugt 2,5 bis 6.1, ist.

Vorzugsweise umfasst die Mischung verschiedener Polyetherasparaginsäureester **P2:** (1) mindestens 50 bis 99 Gew .-%, wie 50 bis 90 Gew .-% oder in einigen Fällen 80 bis 90 Gew .-% eines Polyetherpolyamins gemäß der Formel (IV) worin p einen Wert von 2,5 hat; und (2) 1 bis 50 Gew .-%, insbesondere 10 bis 50 Gew .-%, bevorzugt 10 bis 20 Gew .-%, eines Polyetherpolyamins gemäß der Formel (IV), worin p einen Wert von 6.1 hat.

Ein bevorzugtes Beispiel für eine geeignete Mischung aus Polyetherasparaginsäureestern **P2,** ist DESMOPHEN NH 2850 XP von Bayer Materials Science, das ein Äquivalentgewicht von 295 aufweist, eine Viskosität bei 25 ° C von etwa 100 mPas sowie eine Aminzahl von etwa 190 mg KOH / g.

Weiter kann es vorteilhaft sein, wenn der mindestens eine Polyasparaginsäureester **P1-1,** der gegebenenfalls vorhandene mindestens eine Polyasparaginsäureester **P1-2** und die Mischung verschiedener Polyetherasparaginsäureester **P2** zusammen mehr als 80 Gewichts-%, vorzugsweise mehr als 90 Gewichts-%, insbesondere mehr als 95 Gewichts-%, insbesondere bevorzugt mehr als 98 Gewichts-%, am meisten bevorzugt mehr als 99 Gewichts-%, der NCO-reaktiven Gruppen, insbesondere der Amino-Gruppen, der ersten Komponente enthalten, bezogen auf das Gesamtgewicht der ersten Komponente.

Die zweite Komponente der Zusammensetzung enthält ein aliphatisches Polyisocyanat **B1.**

Als "aliphatisches Isocyanat" wird ein Isocyanat bezeichnet, dessen Isocyanatgruppen direkt an ein aliphatisches C-Atom gebunden sind. Dementsprechend werden solche Isocyanatgruppen als "aliphatische Isocyanatgruppen" bezeichnet.

Geeignete aliphatische Polyisocyanate **B1** sind insbesondere monomere Di- oder Triisocyanaten, sowie Oligomere, Polymere und Derivate von monomeren Di- oder Triisocyanate, sowie beliebige Mischungen davon.

Als aliphatische monomere Polyisocyanate **B1** bevorzugt sind aliphatische oder cycloaliphatische Diisocyanate, insbesondere HDI, TMDI, Cyclohexan-1,3-oder-1,4-diisocyanat, IPDI, H₁₂MDI, 1,3-oder 1,4-Bis-(isocyanatomethyl)cyclohexan und XDI.

Ein besonders bevorzugtes monomeres Polyisocyanat B1 ist HDI, IPDI oder H₁₂MDI. Am meisten bevorzugt ist HDI oder IPDI, insbesondere HDI.

Geeignete Oligomere, Polymere und Derivate der genannten monomeren Di- und Triisocyanate sind insbesondere abgeleitet von HDI oder IPDI, insbesondere HDI. Davon insbesondere geeignet sind kommerziell erhältliche Typen, beispielsweise Desmodur^{®} N 75, Desmodur^{®} N 3600 und Desmodur^{®} N 3900 (alle von Bayer).
Vorzugsweise weisen sie einen NCO-Gehalt von 16 bis 25 Gewichts-% auf, vorzugsweise 20 bis 25 Gewichts-%.

Vorzugsweise weisen sie eine Viskosität bei 23 °C von 500 - 2000 mPa·s, bevorzugt 700 - 1500 mPa·s, insbesondere 1000 - 1500 mPa·s, gemäss DIN EN ISO 3219/A.3, auf.

Als aliphatische Polyisocyanate **B1** besonders bevorzugt sind Oligomere, Polymere und Derivate abgeleitet von HDI oder IPDI, insbesondere HDI. Vorzugsweise weisen sie einen NCO-Gehalt von 16 bis 25 Gewichts-% auf, insbesondere 20 bis 25 Gewichts-%.

Die zweite Komponente der Zusammensetzung enthält zusätzlich mindestens ein Isocyanat-Präpolymer **B2,** vorzugsweise mit einem Isocyanatgruppenäquivalent von 300 bis 1100.

Das Isocyanatpräpolymer **B2** hat eine Isocyanatgruppen(NCO)-funktionalität von vorzugsweise 1,9 bis 4,5 vorzugsweise 1,9 bis 3,5, besonders bevorzugt 1,9 bis 2,5.

Vorzugsweise hat das Isocyanat-Präpolymer **B2** einen Isocyanatgruppen(NCO)-gehalt von 1 bis 40 Gew .-%, bevorzugter 5 bis 20 Gew .-% und am meisten bevorzugt 5 bis 15 Gew .-%, bezogen auf das Gesamtgewicht des Isocyanat-Präpolymer **B2.**

Das Isocyanat-Präpolymer **B2** hat vorzugsweise eine Viskosität von 1000 bis 10000 mPa · s, bevorzugter 1000 bis 5000 mPa · s, am bevorzugtesten 1000 bis 2500 mPa · s.

Vorzugsweise das Isocyanat-Präpolymer **B2** das Reaktionsprodukt eines aliphatischen Isocyanatmonomers und / oder eines aliphatischen Isocyanatoligomers mit einem Polyol.

Die Reaktion zur Herstellung des Isocyanat-Präpolymers **B2** hat ein NCO / OH-Molverhältnis von vorzugsweise 1,1: 1 bis 40: 1 und am meisten bevorzugt 2: 1 bis 25: 1. Die überschüssigen Isocyanatmonomere, die in der Reaktion zur Herstellung des Isocyanatpräpolymers verbleiben, können durch Destillation entfernt werden, um ein Präpolymer ohne Monomer zu erhalten.
Das aliphatische Isocyanat ist vorzugsweise ausgewählt aus der Liste bestehend aus Hexamethylendiisocyanat (HDI), 2,2-Dimethylpentandiisocyanat, 2,2,4-Trimethylhexandiisocyanat, Butendiisocyanat, 1,3-Butadien-1,4-diisocyanat, 2 4,4-Trimethyl-1,6-hexandiisocyanat, Bis (isocyanatoethyl) carbonat, Bis (isocyanatoethyl) ether und Lysinmethylesterdiisocyanat, am bevorzugtesten Hexamethylendiisocyanat.

Das Polyol ist vorzugsweise eines oder mehrere ausgewählt aus der Liste bestehend aus Polyetherpolyol, Polyesterpolyol und Polycarbonatpolyol, besonders bevorzugt ein Polyetherpolyol und / oder ein Polyesterpolyol. Das Polyol hat ein mittleres Molekulargewicht von vorzugsweise mehr als 300 g / mol, bevorzugt mehr als 500 g / mol und am meisten bevorzugt 500 bis 8000 g / mol. Das Polyol enthält vorzugsweise 2 bis 6 funktionelle Hydroxylgruppen und am bevorzugtesten 2 bis 3 funktionelle Hydroxylgruppen.

Das Isocyanat-Präpolymer **B2** umfasst vorzugsweise eine oder mehrere der folgenden Gruppen: eine Carbamatgruppe und eine Allophanatgruppe.

Das Gewichtsverhältnis von aliphatischem Polyisocyanat **B1** zu Isocyanat-Präpolymer **B2 (B1/B2)** liegt im Bereich von 0.7 - 3.0.

Ein Gewichtsverhältnis **B1/B2** von kleiner als 0.7 ist dahingehend von Nachteil, dass daraus zu geringe Werte für die Bruchdehnung bei gleichzeitig hohen Werten für die Zugfestigkeitswerte erhalten werden. Dies führt zu einem zu spröden Produkt, das nicht die erforderliche Flexibilität besitzt.

Ein Gewichtsverhältnis **B1/B2** von grösser als 3 ergibt zu hohe Bruchdehnungswerte und eine Reduktion der Zugfestigkeit.

Vorzugsweise beträgt das Gewichtsverhältnis **B1/B2** von 0.8 - 2.5, insbesondere von 0.9 - 2.0, besonders bevorzugt 0.95 - 1.75, am meisten bevorzugt 1.25 - 1.75.

Es ist weiter vorteilhaft, wenn die Summe der NCO-Gruppen, welche nicht von **B1** und **B2** herrühren, ≤20%, insbesondere ≤10%, insbesondere bevorzugt ≤5%, am meisten bevorzugt ≤1%, beträgt, bezogen auf die Summe aller NCO - Gruppen der zweikomponentigen Polyureazusammensetzung.

Vorzugsweise beträgt der Anteil der aliphatischen Polyisocyanate **B1** und **B2** ≥ 90 Gew.-%, insbesondere ≥ 95 Gew.-%, insbesondere bevorzugt ≥99 Gew.-%, bezogen auf das Gesamtgewicht der zweiten Komponente.

Bevorzugt enthält die Zusammensetzung zusätzlich Füllstoffe. Geeignete Füllstoffe sind insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, Kaoline, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, Zemente, Gipse, Flugaschen, industriell hergestellte Russe, Graphit, Metall-Pulver, beispielsweise von Aluminium, Kupfer, Eisen, Silber oder Stahl, PVC-Pulver oder Hohlkugeln.

Vorzugsweise beträgt der Anteil an Füllstoffen 5 - 35 Gew.-%, 10 - 30 Gew.-%, insbesondere 15 - 25 Gew.-%, bezogen auf das Gesamtgewicht der Zusammensetzung.

Vorzugsweise weist die Zusammensetzung weniger als 5 Gew.-%, weniger als 2 Gew.-%, weniger als 1 Gew.-%, weniger als 0.5 Gew.-%, insbesondere weniger als 0.1 Gew-% organische Lösungsmittel auf, bezogen auf das Gesamtgewicht der Zusammensetzung. Besonders bevorzugt ist die Zusammensetzung frei von organischen Lösemitteln.
Solche organische Lösemittel sind insbesondere ausgewählt aus der Liste bestehend aus Aceton, Methylethylketon, Methyl-n-propylketon, Diisobutylketon, Methylisobutylketon, Methyl-n-amylketon, Methylisoamylketon, Acetylaceton, Mesityloxid, Cyclohexanon, Methylcyclohexanon, Ethylacetat, Propylacetat, Butylacetat, n-Butylpropionat, Diethylmalonat, 1-Methoxy-2-propylacetat, Ethyl-3-ethoxypropionat, Diisopropylether, Diethylether, Dibutylether, Diethylenglykoldiethylether, Ethylenglykoldiethylether, Ethylenglykolmonopropylether, Ethylenglykolmono-2-ethylhexylether, Acetale wie insbesondere Methylal, Ethylal, Propylal, Butylal, 2-Ethylhexylal, Dioxolan, Glycerolformal oder 2,5,7,10-Tetraoxaundecan (TOU), sowie Toluol, Xylol, Heptan, Octan, Naphtha, White Spirit, Petrolether oder Benzin, insbesondere Solvesso^{™}-Typen (von Exxon), Methylenchlorid, Propylencarbonat, Butyrolacton, N-Methylpyrrolidon und N-Ethylpyrrolidon.
Dies ist aufgrund des Umwelt- und Gesundheitsschutzes vorteilhaft, da die Zusammensetzungen dadurch geringe VOC-Emissionen aufweisen. Es wurde überraschenderweise gefunden, dass die vorliegende Erfindung ohne die vorgehend beschriebenen Lösungsmittel eine tiefe Viskosität erreicht.

Die Zusammensetzung kann weitere für Polyureazusammensetzungen gebräuchliche Zusätze enthalten. Insbesondere können die folgenden Hilfs- und Zusatzstoffe vorhanden sein:
- anorganische oder organische Pigmente, insbesondere Titandioxid, Chromoxide oder Eisenoxide;
- Rheologie-Modifizier;
- Additive, insbesondere Netzmittel, Verlaufmittel, Entschäumer, Entlüfter, Stabilisatoren gegen Oxidation, Wärme, Licht oder UV-Strahlung oder Biozide;
oder weitere üblicherweise in solchen Zusammensetzungen eingesetzte Substanzen.

Das Verhältnis der Isocyanatgruppen gegenüber den zu Isocyanatgruppen reaktiven Gruppen, insbesondere Aminogruppen, liegt vorzugsweise im Bereich von 0.95 bis 1.5, bevorzugt im Bereich von 1.0 bis 1.4, bevorzugt im Bereich von 1.05 bis 1.3, bevorzugt im Bereich von 1.05 bis 1.2, besonders bevorzugt im Bereich von 1.1 bis 1.15.

Vorzugsweise weist die Zusammensetzung unmittelbar nach dem Mischen der beiden Komponenten, insbesondere für 30 Sekunden bei 2000 Umdrehungen/min, eine Viskosität von 4'000 bis 10'000 mPas, insbesondere 6'000 bis 9'000 mPas, bevorzugt 8'000 bis 9'000 mPas, auf, gemessen für 30 Sekunden bei 5 Umdrehungen/min mit einer Spindel Nr. 5, bestimmt mit einem Brookfield Viskosimeter bei 23°C.

Bei der ersten und der zweiten Komponente der Zusammensetzung handelt es sich um separate und voneinander getrennte Komponenten. Die erste und die zweite Komponente der Zusammensetzung werden getrennt voneinander hergestellt. Dabei werden die Bestandteile der jeweiligen Komponente vorzugsweise unter Ausschluss von Feuchtigkeit miteinander vermischt, so dass eine makroskopisch homogene Flüssigkeit entsteht. Jede Komponente wird vorzugsweise in einem separaten feuchtigkeitsdichten Gebinde gelagert. Ein geeignetes Gebinde ist insbesondere ein Fass, ein Container, ein Hobbock, ein Eimer, eine Büchse, ein Beutel, ein Kanister oder eine Flasche. Zur Anwendung der Zusammensetzung werden die beiden Komponenten kurz vor oder während der Applikation miteinander vermischt. Das Mischungsverhältnis wird bevorzugt so gewählt, dass die gegenüber Isocyanaten reaktiven Gruppen in einem geeigneten Verhältnis zu den Isocyanatgruppen stehen, wie vorgängig beschrieben. In Gewichtsteilen liegt das Mischungsverhältnis zwischen der ersten und der zweiten Komponente typischerweise im Bereich von etwa 1:1 bis 20:1, insbesondere 2:1 bis 10:1.
Das Vermischen der beiden Komponenten erfolgt mittels eines geeigneten Rührwerkes, beispielsweise eines Doppelwellenmischers, wobei die einzelnen Komponenten geeigneterweise im richtigen Mischungsverhältnis vorkonfektioniert sind. Ebenfalls möglich ist eine koninuierliche maschinelle Verarbeitung mittels einer Zweikomponenten-Dosieranlage mit statischer oder dynamischer Vermischung der Komponenten. Beim Mischen ist darauf zu achten, dass die zwei Komponenten möglichst homogen vermischt werden. Wird vor der Applikation vermischt, so muss darauf geachtet werden, dass zwischen dem Vermischen der Komponenten und der Applikation nicht zu viel Zeit vergeht, da es dadurch zu Störungen, wie beispielsweise einem schlechten Verlauf oder einem verlangsamten oder unvollständigen Aufbau der Haftung zum Substrat, kommen kann. Das Vermischen erfolgt insbesondere bei Umgebungstemperatur, welche typischerweise im Bereich von etwa 5 bis 50 °C, bevorzugt bei etwa 10 bis 35 °C, liegt.

Mit dem Vermischen der beiden Komponenten beginnt die Aushärtung durch chemische Reaktion. Dabei reagieren vorhandene NCO-reaktive Gruppen, insbesondere Aminogruppen, mit vorhandenen Isocyanatgruppen. Als Resultat dieser Reaktionen härtet die Zusammensetzung zu einem festen Material aus. Dieser Vorgang wird auch als Vernetzung bezeichnet.

Weiterhin betrifft die Erfindung eine ausgehärtete Zusammensetzung, erhalten aus einer Zusammensetzung, wie sie vorhergehend beschrieben worden ist, nach dem Vermischen der beiden Komponenten und deren Aushärtung.

Bei der Applikation kann die frisch vermischte, noch flüssige Zusammensetzung als Beschichtung auf eine Fläche appliziert werden. Vorzugsweise wird die Zusammensetzung appliziert, indem sie auf ein Substrat gegossen und anschliessend flächig bis zur erwünschten Schichtdicke verteilt wird, beispielsweise mittels einer Rolle, einer Bürste oder einem Pinsel. Sie kann jedoch auch appliziert werden, indem sie durch Spritzen appliziert wird, vorzugsweise mit einem Spritzdruck von mehr als 50 bar, insbesondere mehr als 100 bar.

In einem weiteren Aspekt betrifft die vorliegende Erfindung ein Verfahren zur Applikation der vorgehend genannten gemischten Zusammensetzung als Deckbeschichtung auf ein Substrat. Vorzugsweise handelt es sich um die nachfolgend als bevorzugt aufgeführte Substrate

Vorzugsweise wird dabei eine Beschichtung (nach dem Trocknen) mit einer Gesamtschichtdicke im Bereich von 100 bis 400 µm, insbesondere 150 bis 300 µm, insbesondere 200 bis 250 µm, erhalten.

Geeignete Substrate, welche mit der Zusammensetzung beschichtet werden können, sind insbesondere Polyurethan- oder Polyharnstoffzusammensetzungen, insbesondere Polyurethan- oder Polyharnstoffmembranen.

Vorzugsweise handelt es sich bei den vorgenannten Substraten um atmosphärisch belastete Substrate. Unter dem Begriff "atmosphärisch belastet" werden vorzugsweise Objekte verstanden, welche durch Luftverunreinigungen und die Witterung belastet werden.

Vorzugsweise handelt es sich bei den vorgehend erwähnten Substraten um Substrate für Dachbelagsanwendungen.

In einem weiteren Aspekt der Erfindung handelt es sich daher um die Verwendung der erfindungsgemässen Zusammensetzung als Beschichtung, insbesondere als Deckbeschichtung, insbesondere zum Schutz der vorgehend genannten Substrate und Objekte gegen Witterung.

Vorzugsweise handelt es sich um eine Verwendung in einem Beschichtungssystem, umfassend mindestens eine Schicht der vorgehend beschriebenen Zusammensetzung.

Weiter ist es vorteilhaft, wenn die Zusammensetzung eine Gesamtschichtdicke nach dem Trocknen im Bereich von 100 bis 400 µm, insbesondere 150 bis 300 µm, insbesondere 200 bis 250 µm, aufweist.

Aus dem vorgehend genannten Verfahren oder aus der Applikation und Aushärtung der Zusammensetzung wird ein Artikel erhalten. In einem weiteren Aspekt betrifft die vorliegende Erfindung einen solchen Artikel. Vorzugsweise handelt es sich um ein vorgehend genanntes Objekt für Dachanwendungen.

Die erfindungsgemässe Zusammensetzung weist vorzugweise folgende Eigenschaften auf:
**Viskosität,** gemessen für 30 Sekunden bei 5 Umdrehungen/min mit einer Spindel Nr. 5, bestimmt mit einem Brookfield Viskosimeter bei 23°C, unmittelbar nach Mischung der beiden Komponenten; 4'000 bis 10'000 mPas, insbesondere 6'000 bis 9'000 mPas, bevorzugt 8'000 bis 9'000 mPas;
**Ablüftzeit** (set to touch time), bestimmt mit einem Beck-Koller Trockenzeit Rekorder nach BE EN ISO 9117-4 (2012); weniger als 120 min, vorzugsweise weniger als 75 min;
**Trocknungszeit** (through dry time), bestimmt mit einem Beck-Koller Trockenzeit Rekorder nach BE EN ISO 9117-4 (2012); weniger als 240 min, vorzugsweise weniger als 180 min;
**Zugfestigkeit** gemäss BS EN ISO 527-3; mehr als 6 N/mm², vorzugsweise mehr als 8 N/mm², mehr als 10 N/mm², mehr als 15N/mm², insbesondere mehr als 18 N/mm²;
**Bruchdehnung** gemäss BS EN ISO 527-3; 80-200 %, vorzugsweise 100-200 %;
**Haftung** (wie im Beispielteil beschrieben); mehr als 30 N, vorzugsweise mehr als 50 N, insbesondere mehr als 80 N.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### 1. Verwendete kommerzielle Substanzen:

| | |
|---|---|
| P1-1 | P1-1, Desmophen NH1423: Amino-funktioneller Polyasparaginsäureester, Aminwert 202 - 208 mg KOH/g, Äquivalenzgewicht 274, Viskosität bei 25 °C 850 - 2,200 mPas nach DIN 53 019 (von Bayer Materials Science) |
| P1-2 | P1-2, Desmophen NH1520: Amino-funktioneller Polyasparaginsäureester, Aminwert 189 - 193 mg KOH/g, Äquivalenzgewicht 290, Viskosität bei 25 °C 800 - 2,000 mPas nach DIN 53 019 (von Bayer Materials Science) |
| P2 | Desmophen NH 2850 XP, Mischung aus Aminofunktionellen Polyasparaginsäureestern, Aminwert 190 mg KOH/g, Äquivalenzgewicht 295, Viskosität bei 25 °C 100 mPas nach DIN 53 019 (von Bayer Materials Science) |
| Entschäumer | Afcona 2290 |
| Dispergiermittel | Tego Dispers 652 |
| HALS | Tinuvin 292 |
| Antioxidant | Univul 3035 |
| Molekularsieb | Molekularsieb |
| TiO₂ | Kronos 2310 |
| Baryt | Baryt |
| Kieselsäure | Pyrogene Kieselsäure |
| B1 | Tolonate HDT-LV, Trimer von Hexamethylen Diisocyanat (HDI); NCO-Gehalt 22.0 - 24.0 Gewichts-% (von Vencorex) |
| B2 | Desmodur E 2863 XP: reaction product of an aliphatic polyester polyol and HDI, having an NCO equivalent of 380, an NCO content of 11.1 wt%, an NCO functionality of about 2.0, a HDI monomer content of less than 0.3 wt%, and a viscosity of about 1350 mPa·s (23 °C), available from Covestro Co., Ltd. |

### 2. Herstellung der Zusammensetzungen

Für jede Zusammensetzung wurden die in den Tabellen 1 bis 3 angegebenen Inhaltsstoffe in den angegebenen Mengen (in Gewichtsteilen) der ersten Komponente ("Komponente 1") zu einer homogenen Flüssigkeit verarbeitet und aufbewahrt. Anschliessend wurde die in den Tabellen 1 bis 3 angegebenen Menge der zweiten Komponente zur ersten Komponente gegeben in einem NCO/NH-Verhältnis von 1.1 und die beiden Komponenten für 30 Sekunden bei 2000 Umdrehungen/s im Speedmixer gemischt. Diese wurden unverzüglich folgendermassen geprüft:
Die **Viskosität** wurde gemessen für 30 Sekunden bei 5 Umdrehungen/min mit einer Spindel Nr. 5, bestimmt mit einem Brookfield Viskosimeter bei 23°C. Die Viskosität aller geprüften Zusammensetzungen war im Bereich von 8'400 - 8'800 mPas.

Die Aushärtungsgeschwindigkeit **("BK Trockenzeit")** wurde bestimmt mit einem Beck-Koller Trockenzeit Rekorder nach BE EN ISO 9117-4 (2012). Das Resultat für Phase 1 entspricht der Ablüftzeit (set to touch time) der Zusammensetzung. Das Resultat für Phase 4 entspricht der Trocknungszeit (through dry time) der Zusammensetzung.

Die mechanischen Eigenschaften werden mit einer Lloyd-Tensometermaschine gemäß BS EN ISO 527-3 gemessen. Die Proben (3fach Bestimmung) werden aus gehärteten Filmen (Aushärtung für 24 h bei 23°C, gefolgt von 24 h in einem Umluftofen bei 60 °C) mit den Abmessungen 25 mm × 100 mm × 0,2 mm hergestellt und anhand des Tensometers die Zugfestigkeit und die Bruchdehnung bestimmt. Die Messungen wurden bei 23° C und 50 % relativer Luftfeuchtigkeit durchgeführt.

Für die Bestimmung der mechanischen Eigenschaften **nach Wasserlagerung** wurden die Probenkörper zusätzlich für 2 Wochen bei 60 °C in einem Wasserbad gelagert und danach die mechanischen Eigenschaften wie vorgehend beschrieben bestimmt.

Für die Bestimmung der mechanischen Eigenschaften **nach Wärmelagerung** wurden die Probenkörper zusätzlich für 2 Wochen in einem Umluftofen bei 80 °C gelagert und danach die mechanischen Eigenschaften wie vorgehend beschrieben bestimmt.

Die **Haftung** wurde bestimmt gemäss ISO 8510-1:1990.
Als Substrat diente eine Membran aus einer 2-komponentigen Polyharnstoffzusammensetzung (Sikalastic-702, erhältlich von Sika UK). 24 Stunden nach Applikation der Polyharnstoffzusammensetzung wurden darauf die Zusammensetzungen aufgebracht und für eine Woche bei 23° C und 50 % relativer Luftfeuchtigkeit gelagert, bevor die Haftung bestimmt wurde.

Bei den Zusammensetzungen ***E1*** bis ***E12*** handelt es sich um erfindungsgemässe Beispiele. Bei den Zusammensetzungen ***Ref.1*** bis ***Ref.13*** handelt es sich um Vergleichsbeispiele.

**Tabelle 1**

| Komponente 1 | **Ref.1** | **Ref.2** | **E1** | **E2** | **Ref.3** | **Ref.4** | **Ref.5** | **Ref.6** | **Ref.7** |
|---|---|---|---|---|---|---|---|---|---|
| P1-1 | 5.08 | 10.08 | 15.08 | 20.08 | 30.08 | 35.08 | 10.08 | 15.08 | 20.08 |
| P2 | 21.08 | 21.08 | 21.08 | 21.08 | 11.08 | 6.08 | 16.08 | 11.08 | 6.08 |
| P1-2 | 22.32 | 17.23 | 12.32 | 7.32 | 7.32 | 7.32 | 22.32 | 22.32 | 22.32 |
| P1/P2 | 1.30 | 1.30 | 1.30 | 1.30 | 3.38 | 6.97 | 2.01 | 3.38 | 6.97 |
| P1-1/P1-2 | 0.23 | 0.59 | 1.22 | 2.74 | 4.11 | 4.79 | 0.45 | 0.68 | 0.90 |

| Komponente 2 | | | | | | | | | |
|---|---|---|---|---|---|---|---|---|---|
| B2 | 52.38 | 52.38 | 52.38 | 52.38 | 52.38 | 52.38 | 52.38 | 52.38 | 52.38 |
| B1 | 47.62 | 47.62 | 47.62 | 47.62 | 47.62 | 47.62 | 47.62 | 47.62 | 47.62 |
| NCO:NH | 1.1 | 1.1 | 1.1 | 1.1 | 1.1 | 1.1 | 1.1 | 1.1 | 1.1 |

| BK Trockenzeit: | | | | | | | | | |
|---|---|---|---|---|---|---|---|---|---|
| Ablüftzeit/Phase 1 [h:min] | 02:45 | 01:30 | 01:15 | 01:00 | 00:45 | 00:30 | 01:45 | 02:00 | 01:30 |
| Trocknungszeit/Phase 4 [h:min] | > 12:00 | 08:00 | 04:00 | 02:30 | 02:15 | 01:30 | > 12:00 | 10:30 | 10:00 |
| Zugfestigkeit, initial [N/mm²] | 10.8 | 11 | 14.2 | 16.1 | 31.9 | 36.7 | 13.1 | 13.7 | 16.6 |
| Bruchdehnung, initial [%] | 250 | 190 | 175 | 135 | 56 | 18 | 200 | 155 | 105 |

**Tabelle 2, n.b. = nicht bestimmbar da zu weich**

| Komponente 1 | **Ref.8** | **Ref.3** | **E3** | **E4** | **E5** | **E6** | **Ref.10** | **Ref.11** | **Ref.12** | **Ref.13** |
|---|---|---|---|---|---|---|---|---|---|---|
| P1-1 | 33.37 | 30.37 | 27.37 | 24.37 | 21.37 | 18.37 | | | | |
| P2 | 14.27 | 17.27 | 20.27 | 23.27 | 26.27 | 29.27 | 14.27 | 17.27 | 20.27 | 23.27 |
| P1-2 | | | | | | | 33.37 | 30.37 | 27.37 | 24.37 |
| P1/P2 | 2.34 | 1.76 | 1.35 | 1.05 | 0.81 | 0.63 | 2.34 | 1.76 | 1.35 | 1.05 |
| P1-1/P1-2 | - | - | - | - | - | - | 0 | 0 | 0 | 0 |

| Komponente 2 | | | | | | | | | | |
|---|---|---|---|---|---|---|---|---|---|---|
| B2 | 52.38 | 52.38 | 52.38 | 52.38 | 52.38 | 52.38 | 52.38 | 52.38 | 52.38 | 52.38 |
| B1 | 47.62 | 47.62 | 47.62 | 47.62 | 47.62 | 47.62 | 47.62 | 47.62 | 47.62 | 47.62 |
| NCO:NH | 1.1 | 1.1 | 1.1 | 1.1 | 1.1 | 1.1 | 1.1 | 1.1 | 1.1 | 1.1 |

| BK Trockenzeit: | | | | | | | | | | |
|---|---|---|---|---|---|---|---|---|---|---|
| Ablüftzeit/Phase 1 [h:min] | 00:30 | 00:45 | 00:45 | 00:45 | 01:15 | 01:15 | 08:00 | 07:00 | 07:00 | 04:15 |
| Trocknungszeit/Phase 4 [h:min] | 01:30 | 01:45 | 02:00 | 02:15 | 02:45 | 03:15 | > 12:00 | > 12:00 | > 12:00 | > 12:00 |
| Zugfestigkeit, initial [N/mm²] | 38 | 30 | 25 | 17.8 | 16.1 | 13.4 | 4.2 | 4.1 | n.b. | n.b. |
| Bruchdehnung, initial [%] | 11 | 28 | 75 | 100 | 140 | 125 | 265 | 260 | n.b. | n.b. |

**Tabelle 3**

| Komponente 1 | **E7** | **E8** | **E9** | **E10** | **E11** | **E12** |
|---|---|---|---|---|---|---|
| P1-1 | 12.58 | 17.58 | 17.58 | 21.7 | 21.7 | 21.7 |
| P2 | 21 | 21 | 21 | 26.7 | 26.7 | 26.7 |
| P1-2 | 14.82 | 9.82 | 9.82 | 0 | 0 | 0 |
| Entschäumer | 0.6 | 0.6 | 0.6 | 0.6 | 0.6 | 0.6 |
| Dispergiermittel | 0.2 | 0.2 | 0.2 | 0.2 | 0.2 | 0.2 |
| HALS | 0.5 | 0.5 | 0.5 | 0.5 | 0.5 | 0.5 |
| Antioxidant | 0.3 | 0.3 | 0.3 | 0.3 | 0.3 | 0.3 |
| Molekularsieb | 1.1 | 1.1 | 1.1 | 1.1 | 1.1 | 1.1 |
| TiO2 | 23.4 | 23.4 | 23.4 | 23.4 | 23.4 | 23.4 |
| Baryt | 24.5 | 24.5 | 24.5 | 24.5 | 24.5 | 24.5 |
| Kieselsäure | 1 | 1 | 1 | 1 | 1 | 1 |
| Total | 100 | 100 | 100 | 100 | 100 | 100 |
| P1/P2 | 2.34 | 1.76 | 1.35 | 1.05 | 1.30 | 1.30 |
| P1-1/P1-2 | 0.85 | 1.79 | 1.79 | - | - | - |

| Komponente 2 | | | | | | |
|---|---|---|---|---|---|---|
| B2 | 52.38 | 60 | 75 | 52.38 | 60 | 75 |
| B1 | 47.62 | 40 | 25 | 47.62 | 40 | 25 |
| NCO:NH | 1.1 | 1.1 | 1.1 | 1.1 | 1.1 | 1.1 |

| BK Trockenzeit: | | | | | | |
|---|---|---|---|---|---|---|
| Ablüftzeit/Phase 1 [h:min] | 01:30 | 01:15 | 01:15 | 01:00 | 01:00 | 01:00 |
| Trocknungszeit/Phase 4 [h:min] | 06:00 | 03:45 | 05:00 | 02:30 | 02:45 | 03:00 |
| Zugfestigkeit, initial [N/mm²] | 16.3 | 15.5 | 13.5 | 22.1 | 18.1 | 17.5 |
| Bruchdehnung, initial [%] | 150 | 120 | 195 | 80 | 110 | 170 |
| Zugfestigkeit, Wasserlagerung [N/mm²] | 19.8 | 14.9 | 8.5 | 18.4 | 18.7 | 9.8 |
| Bruchdehnung, Wasserlagerung [%] | 165 | 160 | 220 | 155 | 175 | 195 |
| Zugfestigkeit, Wärmelagerung [N/mm²] | 15 | 18 | 10.7 | 17.8 | 18.2 | 8.8 |
| Bruchdehnung, Wärmelagerung [%] | 150 | 160 | 220 | 165 | 160 | 200 |
| Haftung [N] | 115 | 104 | 112 | 81 | 81 | 83 |

## Patentansprüche

1. Zusammensetzung bestehend aus einer ersten Komponente enthaltend:
- mindestens ein Polyasparaginsäureester **P1-1** 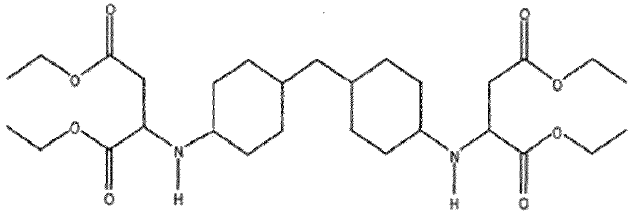 der Formel (II);
- gegebenenfalls einen Polyasparaginsäureester **P1-2** 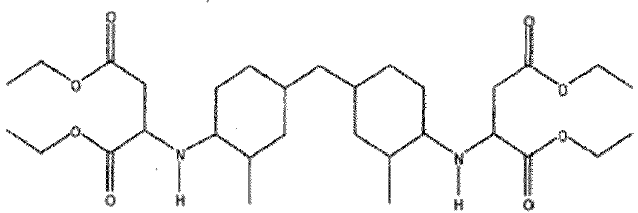 der Formel (III);
- eine Mischung verschiedener Polyetherasparaginsäureester **P2** mit der folgenden Formel: 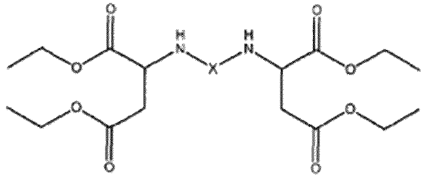 wobei X der Rest eines Polyetherpolyamins ist mit einer Wiederholungseinheit der Struktur 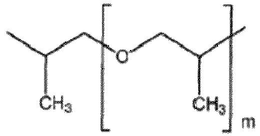 wobei m = 2 bis 35, insbesondere m = 2 bis 6, insbesondere m = 2 bis 4 ist,
und einer zweiten Komponente enthaltend:
- mindestens ein aliphatisches Polyisocyanat **B1;**
- mindestens ein Isocyanat-Präpolymer **B2;**
wobei:
- der Polyasparaginsäureester **P1-1,** der Polyasparaginsäureester **P1-2** und die Mischung verschiedener Polyetherasparaginsäureester **P2** in einer solchen Menge vorhanden sind, dass das Gewichtsverhältnis **((P1-1 + P1-2)/P2)** ≤1.5 beträgt, und
- das Gewichtsverhältnis **P1-1/P1-2** ≥0.65 beträgt, und
- das Gewichtsverhältnis **B1/B2** im Bereich von 0.7 - 3.0 liegt.

2. Zusammensetzung gemäss Anspruch 1, **dadurch gekennzeichnet, dass** das Gewichtsverhältnis **B1/B2** im Bereich von 0.8 - 2.5, 0.9 - 2.0, besonders bevorzugt 0.95 - 1.75, am meisten bevorzugt 1.25 - 1.75 liegt.

3. Zusammensetzung gemäss einem der vorhergehenden Ansprüche, **dadurch gekennzeichnet, dass** der Polyasparaginsäureester **P1-1** und der Polyasparaginsäureester **P1-2** ein Äquivalenzgewicht von 220 - 300, insbesondere 250 - 300, besonders bevorzugt von 270 - 295, aufweist.

4. Zusammensetzung gemäss einem der vorhergehenden Ansprüche, **dadurch gekennzeichnet, dass** das Gewichtsverhältnis **P1-1/P1-2** ≥0.75, insbesondere ≥0.8, insbesondere ≥10 beträgt.

5. Zusammensetzung gemäss einem der vorhergehenden Ansprüche, **dadurch gekennzeichnet, dass** das Gewichtsverhältnis **((P1-1 + P1-2)/P2)** ≤1.4, insbesondere ≤1.35, insbesondere 0.25-1.35, insbesondere 0.5-1.1, besonders bevorzugt 0.6-1.0, am meisten bevorzugt 0.7-0.9 beträgt.

6. Zusammensetzung gemäss einem der vorhergehenden Ansprüche, **dadurch gekennzeichnet, dass** die Mischung aus Polyetherpolyaminen eine Mischung aus Polyetherpolyaminen gemäß der Formel (IV) 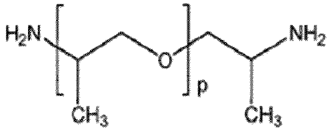 ist,
wobei p eine Zahl mit einem Wert von mindestens 2, insbesondere 2 bis 35, 2 bis 8, bevorzugt 2,5 bis 6.1, darstellt.

7. Zusammensetzung gemäss einem der vorhergehenden Ansprüche, **dadurch gekennzeichnet, dass** die Polyasparaginsäureester **P1-1,** die gegebenenfalls vorhandenen Polyasparaginsäureester **P1-2** und die Mischung verschiedener Polyetherasparaginsäureester **P2** zusammen mehr als 95 Gewichts-% der NCO-reaktiven Gruppen, insbesondere der Amino-Gruppen, der ersten Komponente enthalten, bezogen auf das Gesamtgewicht der ersten Komponente.

8. Zusammensetzung gemäss einem der vorhergehenden Ansprüche, **dadurch gekennzeichnet, dass** das aliphatische Polyisocyanat **B1** ein Oligomer, Polymer und Derivat abgeleitet von HDI oder IPDI, insbesondere HDI, ist, vorzugsweise weist es einen NCO-Gehalt von 16 bis 25 Gewichts-%, vorzugsweise 20 bis 25 Gewichts-%, auf.

9. Zusammensetzung gemäss einem der vorhergehenden Ansprüche, **dadurch gekennzeichnet, dass** das Isocyanatpräpolymer **B2** eine Isocyanatgruppen (NCO)-funktionalität von 1,9 bis 2,5 hat.

10. Zusammensetzung gemäss einem der vorhergehenden Ansprüche, **dadurch gekennzeichnet, dass** die Zusammensetzung unmittelbar nach dem Mischen der beiden Komponenten, insbesondere für 30 Sekunden bei 2000 Umdrehungen/min, eine Viskosität von 4'000 bis 10'000 mPas, insbesondere 6'000 bis 9'000 mPas, bevorzugt 8'000 bis 9'000 mPas, auf, gemessen für 30 Sekunden bei 5 Umdrehungen/min mit einer Spindel Nr. 5, bestimmt mit einem Brookfield Viskosimeter bei 23°C.

11. Zusammensetzung gemäss einem der vorhergehenden Ansprüche, **dadurch gekennzeichnet, dass** die Zusammensetzung weniger als 5 Gew.-%, insbesondere weniger als 1 Gew.-%, insbesondere weniger als 0.1 Gew-% organische Lösungsmittel aufweist, bezogen auf das Gesamtgewicht der Zusammensetzung.

12. Zusammensetzung gemäss einem der vorhergehenden Ansprüche, **dadurch gekennzeichnet, dass** das Verhältnis der Isocyanatgruppen gegenüber den zu Isocyanatgruppen reaktiven Gruppen, insbesondere Amino-Gruppen, im Bereich von 0.95 bis 1.5, bevorzugt im Bereich von 1.0 bis 1.4, bevorzugt im Bereich von 1.05 bis 1.3, bevorzugt im Bereich von 1.05 bis 1.2, besonders bevorzugt im Bereich von 1.1 bis 1.15, liegt.

13. Verwendung einer Zusammensetzung gemäss einem der Ansprüche 1 bis 12 als Beschichtung, insbesondere als Deckbeschichtung, vorzugsweise zum Schutz von Polyurethan- oder Polyharnstoffzusammensetzungen, insbesondere Polyurethan- oder Polyharnstoffmembranen, insbesondere bevorzugt zum Schutz vor Witterung.

14. Verwendung gemäss Anspruch 13 in einem Beschichtungssystem, umfassend mindestens eine Schicht der in den Ansprüchen 1 bis 12 beschriebenen Zusammensetzung, vorzugsweise mit einer Gesamtschichtdicke nach dem Trocknen im Bereich von 100 bis 400 µm, insbesondere 150 bis 300 µm, insbesondere 200 bis 250 µm.

15. Verfahren umfassend den Schritt der Applikation einer Zusammensetzung gemäss einem der Ansprüche 1 bis 12 als Beschichtung, insbesondere Deckbeschichtung, auf ein Substrat, insbesondere Polyurethan- oder Polyharnstoffzusammensetzungen, besonders bevorzugt Polyurethan- oder Polyharnstoffmembranen, vorzugsweise handelt es sich um atmosphärisch belastete Substrate.
